# DEMANDE DE BREVET EUROPEEN

(11) **EP 1 471 682 A1**
(43) Date de publication de la demande: **27.10.2004**
(21) Numéro de dépôt: 04290965.5
(22) Date de dépôt: 09.04.2004
(51) Int. Cl.: H04L 9/32

(54) **Procédé de signature électronique avec mécanisme de délégation, équipements et programmes pour la mise en oeuvre du procédé**

(30) Priorité: 22.04.2003 FR 0304920
(71) Demandeur: FRANCE TELECOM, 75015 Paris (FR)
(72) Inventeur: Frisch, Laurent, 75013 Paris (FR); Mouton, Dimitri, 75015 Paris (FR)
(74) Mandataire: Loisel, Bertrand

(57) **Abrégé**

On génère un jeton de délégation d'un premier signataire (T) à un second signataire (D) et on associe ce jeton de délégation à un document signé électroniquement à l'aide d'une clé cryptographique du second signataire. Le jeton de délégation (J) comporte des données de délégation signées électroniquement pour le premier signataire, en particulier un identifiant du second signataire. Il est généré par un serveur en réponse à une requête adressée par le second signataire en relation avec la signature du document.

## Description

La présente invention concerne les techniques de signature électronique, et vise à proposer un processus efficace et fiable de délégation d'une telle signature.

L'objet fondamental permettant d'avoir confiance en la partie publique d'une clé cryptographique (clé publique) est le certificat. Le standard de certificat utilisé dans de nombreux réseaux dont l'Internet est X.509, version 3. Une spécification en est fournie par le groupe de travail PKIX de l'IETF ("Internet Engineering Task Force") dans la Request For Comments (RFC) 3280, "Internet X.509 Public Key Infrastructure; Certificate and Certificate Revocation List (CRL) Profile" publiée en avril 2002. Le certificat est un objet comprenant notamment:
- la clé publique à certifier;
- l'identité de son possesseur;
- une période de validité;
- une signature cryptographique de ces données par la clé privée d'une Autorité de Certification (AC) émettrice du certificat.

La fonction de signature électronique permet de garantir l'authenticité d'un document, c'est-à-dire d'authentifier de façon sûre son ou ses signataires et de garantir que le document n'a pas été modifié (intégrité). La signature électronique est souvent utilisée pour garantir la non-répudiation. La non-répudiation d'un document consiste à se prémunir contre un déni ultérieur de son auteur.

Les formats les plus couramment utilisés pour des messages signés sont:
- PKCS#7, publié par la société RSA Security, Inc. et par l'lETF en mars 1998 (RFC 2315, "PKCS#7: Cryptographic Message Syntax; Version 1.5"), qui a été repris dans CMS ("Cryptographic Message Syntax", RFC 2630, IETF, juin 1999). Ces standards sont utilisés notamment dans la spécification S/MIME ("Secure Multipurpose Internet Mail Extensions") pour les courriers électroniques signés. Ils reposent sur des certificats issus de PKlX (X.509, CRL, OCSP);
- XML-DSig, faisant partie de la famille des formats de données XML ("eXtended Markup Language"). Peu répandu aujourd'hui, ce format est amené à se développer parallèlement à l'essor des technologies XML;
- PGP correspondant aux messages signés issus du logiciel PGP ("Pretty Good Privacy" commercialisé par la société Networks Associates Technology, Inc.) et de ses analogues. Ses certificats sont différents de ceux issus de PKlX.

D'autres techniques qualifiées de "multi-acteurs" ou "multi-agents", par exemple la signature de groupe, proposent une signature électronique garantissant un certain anonymat au signataire en lui permettant de signer au nom d'un ensemble de personnes.

Ces différents formats de signature électronique connus ne supportent aucun mécanisme de délégation de clés cryptographiques certifiées pour permettre une signature sécurisée par un délégué.

Dans les systèmes où de la délégation est prévue, il s'agit en général de délégation de droits, avec une gestion des habilitations effectuée en interne par le système, ou via un annuaire plus général.

Par exemple, dans un système de gestion de travaux en commun ("workflow"), on peut définir un groupe de "titulaires" ayant le droit de prendre des décisions au sein du système. Pour pallier les absences éventuelles des titulaires, il peut être adjoint à chacun d'eux un ou plusieurs "délégués". Sur décision d'un titulaire (action dans le workflow, par exemple déclaration des congés), tout ou partie de ses habilitations seront attribuées à son délégué, afin de ne pas induire une rupture de fonctionnement dans le workflow. Les décisions prises par le délégué au sein du workflow le seront en son nom propre. Le plus souvent, la trace de la délégation est perdue une fois que la période de délégation est achevée. Dans les meilleurs cas, on peut la retrouver en dépouillant les journaux où est consignée l'historique du workflow. Mais une telle opération de recherche est complexe et coûteuse, surtout si elle doit être effectuée longtemps après.

Dans le cas de workflows utilisant des fonctionnalités de signature électronique, c'est-à-dire où l'objet de la décision précitée est la signature d'un document, il n'est pas prévu dans les formats de signature électronique existants de champ tel que "signé au nom de ...", permettant de retrouver le titulaire au nom de qui le délégué a signé. Ainsi, le document signé, une fois sorti du cadre du workflow, par exemple pour être traité par un tiers ou archivé, ne comportera plus que la signature du délégué, sans trace ou identification du titulaire qui lui a délégué son pouvoir de signature.

Plus généralement, dans les systèmes actuels, la délégation de pouvoir n'est pas incluse dans la signature électronique, de sorte qu'elle ne peut pas être retrouvée une fois qu'un document signé est sorti de son contexte de délégation.

Cette délégation par gestion d'habilitations n'offre pas garantie pour les tiers devant effectuer une vérification a posteriori. Elle ne permet pas d'inclure des données sûres dans les formats standards de données (PKCS#7 par exemple). Les techniques de délégation connues ne permettent de garder la trace de la délégation qu'à court terme, ce qui les rend inadéquates pour des applications mettant en jeu des données à plus long terme, comme la signature électronique.

En effet, la signature électronique doit être persistante, et avec elle doivent persister les éléments permettant de retrouver dans quelles conditions elle a été effectuée, comme par exemple, dans le cas d'une signature manuscrite, l'adjonction de la mention écrite "par intérim".

Un but de la présente invention est de pallier ces limitations de la technique antérieure.

L'invention propose ainsi un procédé de signature électronique de documents, dans lequel on génère un jeton de délégation d'un premier signataire à un second signataire et on associe le jeton de délégation à un document signé électroniquement à l'aide d'une clé cryptographique du second signataire. Le jeton de délégation comporte des données de délégation signées électroniquement pour le premier signataire, ces données de délégation incluant un identifiant du second signataire. Ce jeton est généré par un serveur en réponse à une requête adressée par le second signataire en relation avec la signature du document.

Ce procédé remédie aux inconvénients exposés ci-dessus en offrant un moyen d'effectuer efficacement et pratiquement de la délégation de moyens cryptographiques par l'inclusion d'un jeton contenant les informations sur la délégation, délivré au cas par cas par un serveur qui gère les délégations. L'inclusion du jeton dans la signature peut se fait en respectant intégralement les standards de signature électronique les plus répandus.

Un autre aspect de la présente invention se rapporte à un programme d'ordinateur à installer dans un dispositif informatique pour la signature électronique de documents par un second signataire ayant reçu délégation d'un premier signataire, comprenant des instructions pour mettre en oeuvre un procédé tel que défini ci-dessus lors d'une exécution du programme par des moyens de traitement dudit dispositif.

Un autre aspect de la présente invention se rapporte à un dispositif informatique pour la signature électronique de documents par un second signataire ayant reçu délégation d'un premier signataire, comprenant des moyens de signature électronique d'un document à l'aide d'une clé cryptographique du second signataire, des moyens d'obtention d'un jeton de délégation du premier signataire au second signataire, et des moyens d'association du jeton de délégation au document signé, le jeton de délégation comportant des données de délégation signées électroniquement pour le premier signataire, les données de délégation incluant un identifiant du second signataire. Les moyens d'obtention du jeton de délégation sont agencés pour adresser une requête à un serveur en relation avec la signature du document et pour recevoir le jeton en réponse à ladite requête.

Un autre aspect de la présente invention se rapporte à un serveur de délégation pour intervenir dans la signature électronique de documents par un second signataire ayant reçu délégation d'un premier signataire, comprenant des moyens de mise en oeuvre d'un procédé tel que défini ci-dessus. Un tel serveur fournit le jeton de délégation au second signataire et/ou associe le jeton au document signé électroniquement par le second signataire.

Dans une réalisation avantageuse, la requête adressée par le second signataire en relation avec la signature du document est accompagnée de données dépendant du document à signer, qui sont incluses dans les données de délégation pour générer un jeton de délégation valable pour seulement un document, donc non rejouable.

L'invention propose encore des programmes d'ordinateur à installer dans un dispositif informatique ou dans un serveur de délégation pour la signature électronique de documents par un second signataire ayant reçu délégation d'un premier signataire. Ces programmes comprennent des instructions pour mettre en oeuvre un procédé tel que défini ci-dessus lors de leur exécution par des moyens de traitement dudit dispositif ou serveur.

D'autres particularités et avantages de la présente invention apparaîtront dans la description ci-après d'exemples de réalisation non limitatifs, en référence aux dessins annexés, dans lesquels:
- la figure 1 est un diagramme illustrant la structure d'une enveloppe cryptographique utilisable selon l'invention; et
- les figures 2 et 3 sont des organigrammes illustrant deux modes de réalisation du procédé selon l'invention.

Un jeton cryptographique est une donnée le plus souvent signée par un individu, une autorité ou un serveur et contenant des informations d'administration se rapportant à un autre document, et transmise le plus souvent conjointement à ce document.

Par exemple, un jeton d'horodatage, défini dans le protocole TSP ("Time Stamp Protocol", voir RFC 3161, "Internet X.509 Public Key Infrastructure Time-Stamp Protocol (TSP), août 2001, IETF), contient la date et l'heure d'un document, et est signé par un tiers d'horodatage.

La présente invention introduit le concept de jeton de délégation, permettant d'inclure dans un document signé électroniquement par un délégué au nom d'un titulaire de manière pérenne la trace vérifiable et irrépudiable de la délégation.

Le jeton de délégation J peut être intégré à la signature électronique de trois façons:
- comme partie intégrante des données à signer, dont l'intégrité est garantie par la signature;
- en tant qu'attribut authentifié, dont l'intégrité est garantie par la signature; ou
- en tant qu'attribut non authentifié, inclus dans l'enveloppe de signature mais dont l'intégrité n'est pas garantie par la signature.

Ces différents modes d'inclusion présentent chacun des avantages dépendant du contexte de mise en oeuvre du procédé.

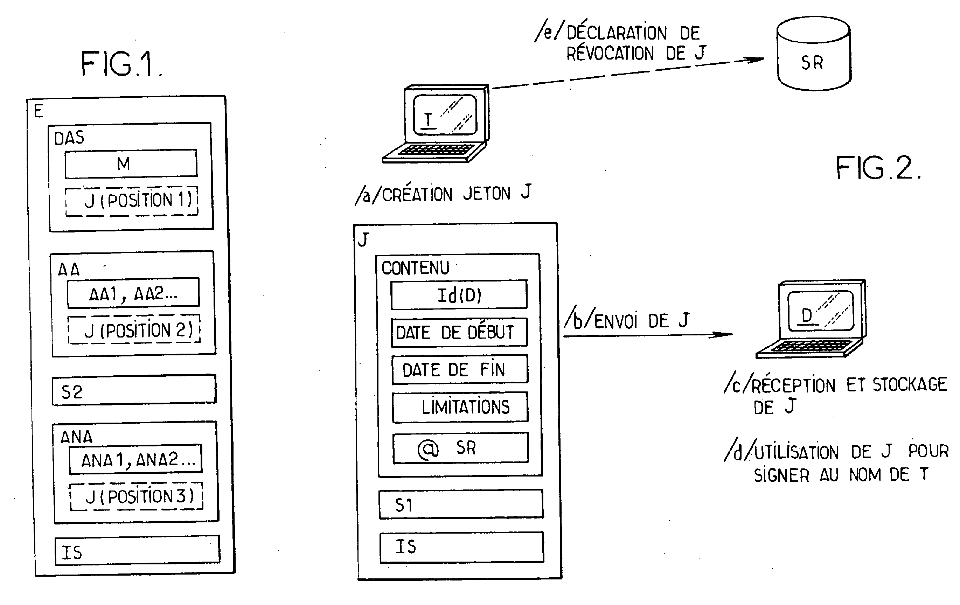

Soit M le message ou document à signer par le délégué D au nom du titulaire T, à l'aide du jeton de délégation J. Le résultat de cette signature est de façon générale appelé enveloppe de signature E. En référence à la figure 1, l'enveloppe de signature E comprend par exemple les données suivantes:
- les données à signer (DAS), qui contiennent au moins le message M, mais peuvent, en fonction de leur format, contenir d'autres informations, comme par exemple des jetons cryptographiques;
- des attributs authentifiés (AA), qui peuvent comprendre un ou plusieurs champs destinés à contenir des informations diverses, et notamment des jetons cryptographiques;
- la signature S2 proprement dite, calculée à l'aide d'une clé cryptographique privée du signataire D. S2 porte à la fois sur DAS et AA.
- des informations sur le signataire (IS), notamment le certificat du signataire D, et optionnellement la chaîne de certificats permettant d'en vérifier la validité; et
- des attributs non authentifiés (ANA), qui peuvent comprendre un ou plusieurs champs destinés à contenir des informations diverses, et notamment des jetons cryptographiques.

Une telle structure d'enveloppe cryptographique est notamment rencontrée dans le cadre d'une signature au format standard PKCS#7. Il convient de préciser que les DAS peuvent être détachées, c'est-à-dire ne pas être contenues dans l'enveloppe et que les AA et les ANA sont optionnels.

La figure 1 montre en traits interrompus trois positions possibles du jeton de délégation J dans l'enveloppe de signature E:
- en position 1 (DAS), le jeton J fait partie des données signées, et donc du message transmis au sens large du terme. Ainsi, les données signées sont non seulement M, mais {M, J}. Ceci est comparable à une mention manuscrite "par intérim" rajoutée à un document avant de le signer: le jeton de délégation est vraiment une partie des données signées. Cela nécessite que le format des données signées permette cette modification. Par exemple, si le destinataire s'attend à retrouver dans les données signées uniquement un fichier de type PDF ("page description format"), l'adjonction de J dans ces données peut être considérée comme une pollution du format. Par contre, si les DAS consistent en la concaténation de champs d'un formulaire, J peut être considéré comme un champ supplémentaire;
- en position 2 (AA), le jeton J est signé au même titre qu'en position 1, mais en quelque sorte en tant qu'information annexe. Si l'enveloppe contient des AA, ce sont les AA qui sont signées, et ces AA contiennent obligatoirement un hash des DAS, c'est-à-dire un code calculé en appliquant un algorithme de hachage classique aux DAS. Cette position 2 offre de bonnes propriétés car elle ne change pas la nature du message signé M tout en incluant le jeton J dans les éléments authentifiés par la signature électronique S2 de D;
- en position 3 (ANA), le jeton J est simplement accolé aux données signées et à la signature S2, mais n'est pas lui-même signé. De ce fait, il peut être retiré ou rajouté sans que cela change la validité de la signature elle-même. C'est le cas général pour les jetons cryptographiques, comme par exemple les jetons d'horodatage. Ce cas est comparable à une feuille indépendante jointe à un document signé par ailleurs, et faisant foi de la délégation de signature pour ce document.

Il est proposé plusieurs méthodes pour créer le jeton de délégation, avec des intérêts pratiques différents, qui sont adaptées à des contraintes organisationnelles différentes:
- délégation directe, sans intervention d'un serveur;
- délégation avec serveur.

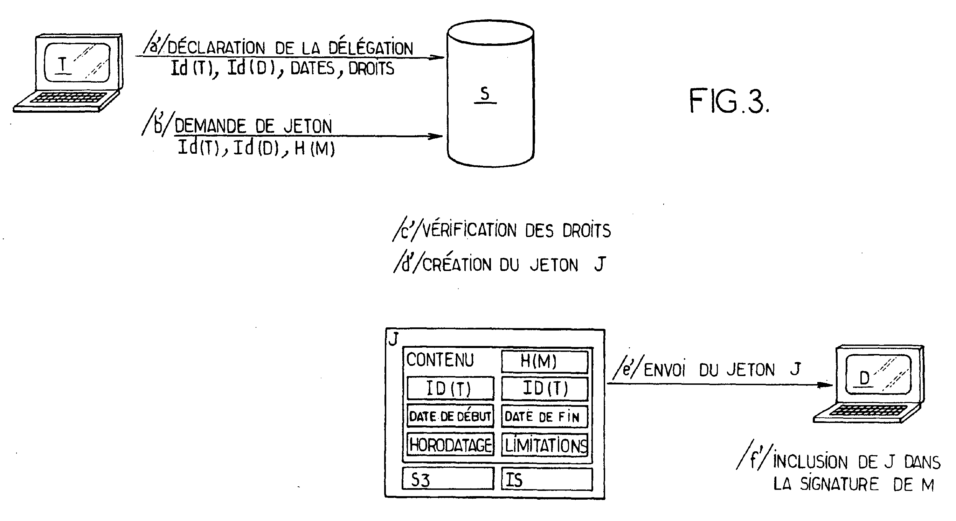

Ces méthodes sont décrites ci-après en référence aux figures 2 et 3, où on voit les dispositifs informatiques détenus par le titulaire T et son délégué D, qui consistent par exemple en des ordinateurs ou terminaux communiquant entre eux par l'intermédiaire d'un ou plusieurs réseaux de télécommunication non représentés (par exemple un réseau de type lP tel que l'Internet ou un Intranet). Ces dispositifs sont équipés de programmes adaptés à la mise en oeuvre des étapes décrites ci-après. Les figures 2 et 3 montrent aussi un serveur de délégation S et un serveur de révocation SR utilisables dans certains modes de réalisation du procédé. Ces serveurs sont raccordés au réseau de télécommunication et sont également équipés de programmes adaptés à la mise en oeuvre des étapes décrites ci-après, par exemple dans le cadre d'un service web de délégation de signature.

Dans la première méthode (figure 2), le titulaire T envoie directement à son délégué D le jeton de délégation J, et le délégué l'inclura ensuite dans les signatures électroniques qu'il fera au nom de T, à l'une des trois positions représentées sur la figure 1. La délégation peut alors se dérouler de la façon suivante.
/a/ T crée le jeton J en signant avec sa clé privée des données de délégation comprenant:
   - un identifiant de D, qui peut être par exemple la clef publique de D associée à sa clé privée dans un système de cryptographie asymétrique, ou de préférence le certificat électronique de D (qui inclut sa clé publique);
   - des données décrivant la période de validité de la délégation et donc du jeton J. Ces données indiquent typiquement une date de début de période, et une date de fin de période ou une durée;
   - une limite fonctionnelle de validité de la délégation, qui peut se présenter sous la forme d'un texte décrivant les pouvoirs conférés à D dont témoigne le jeton J, ou sous la forme d'une liste de fonctionnalités accessibles, ou sous la forme d'un montant maximal autorisé si les pouvoirs du délégué concernent des achats, etc.;
   - le cas échéant l'adresse @ SR du serveur de révocation auprès duquel T est susceptible de déclarer ultérieurement la révocation du jeton de délégation.
   T intègre au jeton J la signature électronique S1 de ces données de délégation. T peut éventuellement ajouter au jeton J un horodatage de ce jeton ou toute autre information utile.
/b/ T envoie le jeton J à D, par exemple par e-mail ou par tout autre moyen électronique, l'informant ainsi de ses pouvoirs de délégué.
/c/ D reçoit et conserve le jeton J.
/d/ A chaque fois que D effectue une signature au nom de T, il inclut J dans l'enveloppe E de la signature, à l'une des trois positions montrées sur la figure 1.

On obtient ainsi un jeton de délégation unique pour toute la période de délégation, utilisable par D à discrétion, et ne dépendant pas des données signées par D mais seulement de la période de délégation.

Dans ce cas, il est préférable de coupler l'usage du jeton de délégation avec un horodatage des signatures effectuées par D au nom de T afin de pouvoir a posteriori s'assurer que ces signatures ont été réalisées au cours de la période de validité spécifiée.

Dans une variante de réalisation, le jeton J est déposé par T auprès d'un serveur de délégation S (non représenté sur la figure 2). Le jeton de délégation peut alors est demandé à S par D à chaque fois qu'il a besoin de l'inclure dans une signature. On peut aussi prévoir que le jeton J déposé auprès du serveur S après création par T soit inclus par S à qui D envoie les signatures qu'il effectue par délégation. Dans ce dernier cas, J ne pourra être inclus qu'à la position 3 indiquée sur la figure 1.

Dans une réalisation avantageuse, le possibilité est donnée au titulaire T de révoquer la délégation faite à D. On met alors en place un serveur SR tenant à jour des listes de jetons de délégation révoqués, analogue aux serveurs de CRL du standard X.509, auprès duquel le titulaire T déclare si nécessaire la révocation du jeton (/e/ sur la figure 2). On peut aussi envisager de recourir à un protocole de contrôle en ligne de validité de jeton, analogue à OCSP pour les certificats (voir RFC 2560, "Internet X.509 Public Key Infrastructure; Online Certificate Status Protocol - OCSP", publiée en juin 1999 par l'IETF). Le jeton J contient alors une adresse @ SR correspondant au serveur SR formant point de distribution de la liste de révocation ou du service de contrôle en ligne.

La deuxième méthode possible pour obtenir un jeton de délégation J (figure 3) est la méthode de délégation par serveur. Le titulaire T déclare la délégation auprès d'un serveur S, qui se charge de créer le jeton J à chaque requête du délégué D. Le jeton pourra être transmis au délégué D pour qu'il l'associe aux signatures qu'il réalise, ou être inclus directement par le serveur S dans les signatures réalisées par D et transmises dans ce but à S. Ce procédé a pour avantage de permettre de générer un jeton J différent pour chaque signature, et d'inclure dans J non seulement les informations de délégation, mais également un horodatage de la requête de délégation, ou une donnée dépendant du message signé, par exemple un hash de celui-ci. Le jeton sera inclus dans les signatures électroniques, de manière identique au cas précédent, à l'une des trois positions illustrées par la figure 1.

La délégation peut alors se dérouler de la façon suivante.
/a'/ T déclare la délégation auprès de S en lui fournissant son identité (par exemple son certificat), l'identité du délégué, et les limites temporelles et fonctionnelles de cette délégation, et en avertit D par un moyen quelconque (e-mail, téléphone, avertissement adressé par S, etc.).
/b'/ Lorsque D a besoin de réaliser la signature électronique d'un message M au nom de T, D adresse une requête de jeton de délégation à S.
/c'/ S vérifie qu'une délégation est effectivement en cours entre T et D.
/d'/ S crée le jeton J en signant avec une clé privée associée au service des données de délégation comprenant les mêmes données que celles indiquées à l'étape /a/ ci-dessus, plus un identifiant de T qui peut être par exemple la clef publique de T ou le certificat électronique de T. S intègre au jeton J la signature électronique S3 de ces données de délégation. S peut éventuellement ajouter au jeton J un horodatage de ce jeton ou toute autre information utile.
/e'/ S envoie le jeton J à D, par exemple par e-mail ou par tout autre moyen électronique.
/f/ D inclut J dans l'enveloppe E de la signature électronique qu'il est en train de réaliser au nom de T, à l'une des trois positions montrées sur la figure 1.

On obtient ainsi un jeton de délégation qui peut être différent pour chaque signature réalisée par D au nom de T au cours de la période de délégation.

Dans le cas où le jeton J ne dépend pas de M et n'inclut pas d'horodatage intrinsèque précis, il est souhaitable de coupler l'usage du jeton de délégation avec un horodatage des signatures effectuées par D au nom de T afin de pouvoir a posteriori s'assurer que ces signatures ont été réalisées au cours de la période de validité du jeton, et donc au cours de la période de délégation.

Dans une réalisation préférée, le jeton J dépend du message M. Afin que le jeton J ne soit pas réutilisable par D dans une autre signature électronique, on le fait avantageusement dépendre du message signé M. Dans ce but, D joint à sa requête de jeton un hash du message, H(M).

Afin de placer dans le temps la signature électronique et de pouvoir vérifier a posteriori que ce pouvoir a bien été utilisé dans la bonne période, le serveur S peut ajouter dans J un horodatage: il peut placer lui-même l'heure de création du jeton, ou y inclure un jeton d'horodatage obtenu auprès d'un serveur d'horodatage tiers, par exemple selon le protocole TSP.

La déclaration de délégation par le titulaire T (étape /a'/) peut se faire au moyen d'un service web de déclaration hébergé par le serveur S, selon la procédure suivante
- T se connecte à S et accède à une page HTML contenant un formulaire de déclaration de délégation et une application à code mobile ("applet") permettant la signature de ce formulaire à l'aide d'un dispositif de signature électronique déjà présent sur le poste de T;
- T remplit le formulaire avec les dates limites de la délégation, les limites de droits associés, et l'identité du délégué, sélectionnable par interrogation d'un annuaire électronique; et
- T effectue la signature de ce formulaire et l'envoie à S, qui en vérifie la signature avant d'en stocker les données dans sa base de données.

Lorsque la délégation devient effective, S en informe D par un e-mail, grâce à l'adresse contenue dans le certificat de D ou trouvée dans l'annuaire.

D peut aussi effectuer des signatures au nom de T dans le cadre d'un service web hébergé par le serveur S, via une autre page HTML contenant un formulaire à remplir et une applet permettant la signature de ce formulaire à l'aide d'un dispositif de signature électronique déjà présent sur le poste de D, ainsi que l'obtention d'un jeton de délégation auprès du serveur S. Lorsqu'un formulaire doit être signé par délégation, un bouton particulier du formulaire sert à invoquer la fonction de l'applet qui permet de se procurer le jeton de délégation.

Lorsque D actionne ce bouton, une requête de jeton de délégation est adressée à S (/b'/). Cette requête contient : l'identité ld(T) du titulaire T (sélectionnable à partir de l'annuaire); l'identité ld(D) du délégué D; et le hash H(M) du message M à signer (en général, M consistera en la concaténation des champs du formulaire selon un format prédéfini pour le service concerné). Si nécessaire, la requête pourra aussi contenir les éléments permettant à S de vérifier que le message M est conforme aux limitations imposées par T sur l'étendue de la délégation, par exemple le montant d'un engagement financier.

A réception de cette requête, S vérifie en consultant sa base de données qu'une délégation est bien active entre T et D (/c'/), et effectue les vérifications de limitations si nécessaire. S crée alors le jeton de délégation J au format décrit ci-dessus (/d'/) et le transmet à D en réponse à sa requête (/e'/). La signature est effectuée par l'applet téléchargée au poste de D et le jeton J y est inclus (/f'/). La signature est ensuite traitée par le service selon la logique de traitement standard définie pour ce service.

D'autre part, au lieu d'envoyer à S une requête de jeton de délégation, D peut directement envoyer à S la signature qu'il a effectuée au nom de T, afin que S y inclue lui-même le jeton J créé selon l'étape /d'/ ci-dessus. Dans ce cas, J ne pourra être inclus qu'à la position 3 indiquée sur la figure 1.

Lorsque le destinataire de la signature électronique effectuée par D au nom de T souhaite vérifier sa validité, il procède comme pour une signature normale, et il ajoute les étapes de vérification suivantes:
- extraire le jeton J;
- vérifier la validité cryptographique du jeton J à l'aide du champ IS contenant le certificat du signataire du jeton (T ou S), en vérifiant aussi que ce signataire est bien habilité à signer des délégations (autorité de confiance ou attribut nécessaire dans le certificat); le cas échéant, il peut être nécessaire de remonter toute une chaîne de certification;
- si le jeton J contient une adresse de contrôle de révocation, s'assurer de la non-révocation;
- vérifier la validité de l'horodatage, si celui est réalisé selon un procédé nécessitant une vérification (TSP par exemple);
- vérifier que l'horodatage indique bien une date comprise entre les dates de début et de fin de validité du jeton J;
- si le jeton J contient un hash du message signé, vérifier ce hash en le comparant avec un nouveau calcul portant sur le message M effectivement transmis;
- vérifier, si nécessaire, que les limitations indiquées dans le jeton J sont compatibles avec les informations signées; et
- vérifier la concordance de l'identité du délégué mentionnée dans le jeton avec l'identité du signataire.

Si toutes ces vérifications donnent un résultat correct, alors la signature peut être considérée comme ayant été effectuée par D au nom de T.

## Revendications

1. Procédé de signature électronique de documents, dans lequel on génère un jeton de délégation d'un premier signataire (T) à un second signataire (D) et on associe le jeton de délégation (J) à un document (M) signé électroniquement à l'aide d'une clé cryptographique du second signataire, le jeton de délégation comportant des données de délégation signées électroniquement pour le premier signataire, les données de délégation incluant un identifiant du second signataire, **caractérisé en ce que** le jeton de délégation (J) est généré par un serveur en réponse à une requête adressée par le second signataire (D) en relation avec la signature du document (M).

2. Procédé selon la revendication 1, dans lequel la signature électronique (S2) effectuée à l'aide de la clé cryptographique du second signataire (D) porte sur le document (M) accompagné du jeton de délégation (J).

3. Procédé selon la revendication 1, dans lequel la signature électronique (S2) effectuée à l'aide de la clé cryptographique du second signataire (D) porte d'une part sur le document (M) et d'autre part sur des attributs authentifiés incluant le jeton de délégation (J).

4. Procédé selon la revendication 1, dans lequel le jeton de délégation (J) est associé au document signé à l'aide de la clé cryptographique du second signataire (D) sans être lui-même signé à l'aide de la clé cryptographique du second signataire.

5. Procédé selon l'une quelconque des revendications précédentes, dans lequel les données de délégation incluent en outre des données décrivant une période de validité du jeton de délégation (J).

6. Procédé selon l'une quelconque des revendications précédentes, dans lequel les données de délégation incluent en outre des données de description de pouvoirs de délégation conférés par le jeton (J).

7. Procédé selon l'une quelconque des revendications précédentes, dans lequel le jeton de délégation (J) comporte en outre des informations d'horodatage du jeton.

8. Procédé selon l'une quelconque des revendications précédentes, dans lequel un serveur de révocation (SR) est prévu pour mémoriser des informations sur la révocation éventuelle du jeton de délégation (J) par le premier signataire (T).

9. Procédé selon la revendication 8, dans lequel les données de délégation incluent en outre une adresse d'accès au serveur de révocation (SR).

10. Procédé selon l'une quelconque des revendications précédentes, dans lequel les données de délégation sont signées électroniquement à l'aide d'une clé cryptographique du premier signataire (T).

11. Procédé selon l'une quelconque des revendications 1 à 9, dans lequel les données de délégation incluent en outre un identifiant du premier signataire (T) et sont signées électroniquement à l'aide d'une clé cryptographique d'un tiers (S).

12. Procédé selon l'une quelconque des revendications précédentes, dans lequel le jeton de délégation (J) est associé par le second signataire (D) au document signé électroniquement à l'aide d'une clé cryptographique du second signataire.

13. Procédé selon l'une quelconque des revendications précédentes, dans lequel le jeton de délégation (J) est adressé au second signataire (D) par le serveur (S).

14. Procédé selon la revendication 13, dans lequel le jeton de délégation (J) est associé au document signé par une applet téléchargée sur le poste du second signataire (D) depuis le serveur (S).

15. Procédé selon l'une quelconque des revendications 1 à 11, dans lequel le second signataire (D) signe électroniquement le document et transmet le document signé au serveur qui lui associe le jeton de délégation (J).

16. Procédé selon l'une quelconque des revendications précédentes, dans lequel ladite requête est accompagnée de données dépendant du document à signer (M), qui sont incluses dans lesdites données de délégation pour générer le jeton de délégation (J).

17. Procédé selon la revendication 16, dans lequel lesdites données dépendant du document à signer comprennent un code (H(M)) obtenu par hachage du document (M).

18. Dispositif informatique pour la signature électronique de documents par un second signataire (D) ayant reçu délégation d'un premier signataire (T), comprenant des moyens de signature électronique d'un document (M) à l'aide d'une clé cryptographique du second signataire, des moyens d'obtention d'un jeton de délégation du premier signataire au second signataire, et des moyens d'association du jeton de délégation au document signé, le jeton de délégation (J) comportant des données de délégation signées électroniquement pour le premier signataire, les données de délégation incluant un identifiant du second signataire, **caractérisé en ce que** les moyens d'obtention du jeton de délégation (J) sont agencés pour adresser une requête à un serveur (S) en relation avec la signature du document (M) et pour recevoir le jeton en réponse à ladite requête.

19. Dispositif selon la revendication 18, dans lequel les moyens de signature sont agencés pour signer électroniquement le document (M) accompagné du jeton de délégation (J) à l'aide de la clé cryptographique du second signataire (D).

20. Dispositif selon la revendication 18, dans lequel les moyens de signature sont agencés pour signer électroniquement d'une part le document (M) et d'autre part des attributs authentifiés incluant le jeton de délégation (J) à l'aide de la clé cryptographique du second signataire (D).

21. Dispositif selon l'une quelconque des revendications 18 à 20, dans lequel les données de délégation incluent en outre des données décrivant une période de validité du jeton de délégation (J).

22. Dispositif selon l'une quelconque des revendications 18 à 21, dans lequel les données de délégation incluent en outre des données de description de pouvoirs de délégation conférés par le jeton (J).

23. Dispositif selon l'une quelconque des revendications 18 à 22, dans lequel les données de délégation incluent en outre une adresse d'accès à un serveur de révocation (SR) mémorisant des informations sur la révocation éventuelle du jeton de délégation (J) par le premier signataire (T).

24. Dispositif selon l'une quelconque des revendications 18 à 23, dans lequel le jeton de délégation (J) comporte en outre des informations d'horodatage du jeton.

25. Dispositif selon l'une quelconque des revendications 18 à 24, dans lequel ladite requête est accompagnée de données (H(M)) dépendant du document à signer (M).

26. Serveur de délégation (S) pour intervenir dans la signature électronique de documents par un second signataire (D) ayant reçu délégation d'un premier signataire (T), comprenant des moyens de mise en oeuvre d'un procédé selon l'une quelconque des revendications 1 à 17.

27. Programme d'ordinateur à installer dans un dispositif informatique pour la signature électronique de documents par un second signataire (D) ayant reçu délégation d'un premier signataire (T), comprenant des instructions pour mettre en oeuvre un procédé selon l'une quelconque des revendications 1 à 17 lors d'une exécution du programme par des moyens de traitement dudit dispositif.

28. Programme d'ordinateur à installer dans un serveur de délégation (S) intervenant dans la signature électronique de documents par un second signataire (D) ayant reçu délégation d'un premier signataire (T), comprenant des instructions pour mettre en oeuvre un procédé selon l'une quelconque des revendications 1 à 17 lors d'une exécution du programme par des moyens de traitement dudit serveur.
